# EUROPEAN PATENT APPLICATION

(11) **EP 4 023 780 A1**
(43) Date of publication of application: **06.07.2022**
(21) Application number: 20780809.8
(22) Date of filing: 19.08.2020
(51) Int. Cl.: C22B 26/12, C22B 59/00

(54) **METHODS AND SYSTEMS FOR RECOVERING RARE EARTH ELEMENTS AND/OR LITHIUM USING MARINE MACROALGAE**

(30) Priority: 28.08.2019 PT 2019115757
(71) Applicant: N9VE - Nature, Ocean and Value, Lda, 4150-726 Porto (PT)
(72) Inventor: GALINHO HENRIQUES, Bruno Manuel, 6300-230 VALE DE ESTRELA, GUARDA (PT); DA CUNHA PEREIRA, Maria Eduarda, 3810-056 AVEIRO (PT); PINTO BASTO PINHEIRO TORRES, Jose Maria, 4150-658 PORTO (PT)
(74) Representative: Zimmermann, Tankred Klaus
(86) International application number: PCT/PT2020/000003
(87) International publication number: WO 2021/040551

(57) **Abstract**

The present invention refers to processes and systems of recovery of rare earth elements and/or Lithium, from a certain type of primary salted medium such as a solid medium, such as muds, or such as an aqueous medium of high salinity, in particular from aqueous media with a pH greater than 6, and based upon certain types of living marine macroalgae.

## Description

### Field of the invention

The present invention refers to the field of processes and systems of recovery of rare earth elements (REEs) and/or Lithium, and optionally of other elements, such as for example potentially toxic elements (PTEs), from a given primary medium, available as a solid medium, as muds or as an aqueous medium, such as for example industrial effluents or parts of aqueous streams, and based upon the use of certain types of algae, in particular certain living marine macroalgae.

### Background of the invention

The increasing demand for several REEs for different applications in new technologies, the relative geographic limitation of their origin in quantities available for extraction, as well as the environmental impact caused by the extraction process, and the potential toxicological impact associated with their presence in effluents of industrial processes, have been driving an increasing interest on the possibility of recovering REEs from aqueous media in general, and from industrial effluents, in particular.

And, besides of said REEs, also Lithium has been assuming an increasing technological and economic relevance, whereby this metal can be frequently found in saline aqueous media, both at the sea as in industrial effluents.

Many saline aqueous media provide therefore an opportunity for recovering elements of economic value, whereby it is ever more important that such recovery can be attained without itself generating environmental impacts.

Moreover, the treatment of industrial effluents presently constitutes a problem for many industries because of the applicable regulations in terms of final disposal of said effluents, including the need for removal of several potentially toxic elements.

In this particular, there are known several solutions whereby the prior art also includes references to the use of algae and micro-organisms for separating rare earth elements from an aqueous medium.

The document JPS6415133 (A) discloses encapsulation of algae, such as green algae or brown algae, for recovery of noble metals, such as gold, silver and Platine. In particular, said algae are pulverized into fine particles that can pass through a mesh of 50.

The document JPH0283093 (A) discloses a method of purification of industrial effluents using chlorophyceae of the genre unicellular chlamydomonas for sorption of heavy metals, such as Cu, Ni or similar, from said industrial effluent.

The document JPH06212309 (A) discloses a method of separation of REEs based upon the use of a selective sorption by *spirulina* or *chlorella,* both microalgae, that can be added to a solution of ions of rare earth elements, whereby the sorption of these elements is maximal at a pH between 3 and 4,5.

The document JPH0998773 (A) discloses a new microorganism that pertains to the genre metilo-bacterium and that is able of accumulating REEs.

The document JP2013001964 (A) discloses another method for recovering rare earth elements, in this case using iron reducing bacteria, preferentially the *shewanella* alga.

The document EP 3008219 B1 discloses a process of isolating one rare earth element: the scandium.

The document JP2017008355 (A) discloses another method of recovery of REEs based upon micro-organisms, and the document JP2017061739 (A) discloses a method that uses green alga of *scenedesmus.*

The document EP 0599711 A1 discloses a device for treatment of a liquid effluent with pollutants, notably metals and/or radionucleotids, by means of living cells of photosynthetic micro-organisms, such as for example Porphyridium cruentum.

Moreover, the document "Removal and recovery of Critical Rare Earth elements from contaminated waters by living Gracilaria gracilis", Jacinto J., Henriques B., et *al,* discusses the use of *Gracilaria gracilis* in the recovery of rare earth elements (ETRs) from liquid effluents. However, this document does not disclose the optimal conditions for processing aqueous media, in an industrial process framework and considering several factors and parameters that are relevant for the operation of such a process and associated systems.

The document ES 2251286 A1 discloses a system of treatment of residual waters including filamentous green macroalgae of the genres *Hydrodictyon* or *Cladophora,* capable of absorbing and recycling nutrients and/or fixating/capturing heavy metals, and making specific reference to concentrations of copper and zinc.

The document DE 4321089 A1 discloses a process for selective decontamination of heavy metals from toxic media, in water, mud, sediments, or contaminated soil, contaminated with heavy metals, through the use of algae, whereby biomasses, alive or devitalized, obtained from marine macroalgae are treated and placed in contact with the toxic media.

None of the documents in the prior art discloses types of living macroalgae, quantities and further optimal operating parameters for recovering REEs and/or Lithium from aqueous effluents, notably of the industrial type. These aspects are determinant for an industrialization of processes of recovery of REEs and/or Lithium from aqueous media, in particular based upon macroalgae.

### General description of the invention

The objective of the present invention is to provide efficient and scalable processes for recovery of rare earth elements (REEs) and/or Lithium from primary media, in particular from aqueous media associated with residues from industrial processes, including solid, liquid and mud-like effluents, or associated with aquifers, such as for example dams, water lines, sea shores or open sea.

The aforementioned objective is solved according to the present invention by means of a process of recovery according to claim 1.

In particular, the aforementioned objective is solved by a process of recovery that includes an initial volume of an aqueous medium, optionally obtainable from a primary medium that is available as a solid, semi-solid or liquid medium, presenting initial concentrations of rare earth elements and/or Lithium, eventually further other elements, such as for example elements from the group of Platine, potentially toxic elements (PTEs), and providing at least a first quantity of living marine macroalgae to this aqueous medium.

It is preferred when said quantity of living marine macroalgae can interact in active manner with said aqueous medium, including with the aid of forced circulation means of the aqueous medium, such as for example of the type rotating shovels, inducing closed trajectory circulation in a collecting disposition, and/or further of injection means of a gas volume, including of atmospheric gas or of carbon dioxide, into said aqueous medium.

Said process can be carried out in successive cycles of the type processing batch, during a staging period of time at a first disposition of recovery of the elements of interest.

Said process can be carried out based upon a quantity of living marine macroalgae and its periodic removal, for example daily, by a fraction thereof corresponding to the growth rate of the macroalga in the considered period.

Said process can include at least a first and a second successive recovery dispositions for collection of said aqueous medium, including respective steps of exposure to respective first and second quantities of living marine macroalgae, after which said aqueous medium can be supplied for example to a free running natural water line.

Said process can include the recirculation of a given volume of salted water, for example sea water, in closed circuit, in a plurality of operation cycles.

An associated objective is to provide a process that includes the separation of said rare earth elements and/or Lithium on said macroalgae, after a staging period of time and separation thereof from the aqueous medium.

This objective is solved according to the present invention by means of exposure of the living marine macroalgae, after separation thereof from said aqueous medium at the end of a staging period of time, to a dissolving agent so as to obtain a first solution including the quantities of REEs and/or Lithium recovered by the macroalgae.

Alternatively, the separation of REEs and/or Lithium can be realized by means of incineration, combustion or pyrolysis of the macroalgae so as to obtain the REEs and/or Lithium recovered by the macroalgae in the resulting ashes or chars.

The REEs obtained in the secondary medium can include at least one, preferentially a plurality from among the elements Lanthanum, Cerium, Praseodymium, Neodymium, Promethium, Samarium, Europium, Gadolinium, Terbium, Dysprosium, Holmium, Erbium, Thulium, Ytterbium, Lutetium, Scandium e Yttrium.

It is preferred when the separation of the elements previously recovered from the saline aqueous medium by the living marine macroalgae, for example from a first solution provided thereform, besides of REEs and/or Lithium, further includes at least one of: at least one potentially toxic element (PTEs), and at least one element from the group of the Platine, such as for example Ruthenium, Palladium, Osmium, Iridium and Platine.

In the scope of the present invention, and according to the presently generally accepted definition, by potentially toxic elements one ought to understand a set of elements such as for example Antimony, Arsenic, Cadmium, Chromium, Copper, Lead, Mercury, Nickel, Selenium, Tellurium, Thallium, Tin, Cobalt, Manganese, Molybdenum, Vanadium, Strontium and Zinc.

An objective associated with the present invention is to provide systems for carrying out processes of the type disclosed by the invention, in particular aiming at recovering rare earth elements (REEs) and/or Lithium, optionally further of other elements, including potentially toxic elements (PTEs), and elements of the group of the Platine, from primary media provided in the form of saline aqueous media, by living marine macroalgae, with better efficiency of means used, including optimal quantities to be used, less construction complexity and smaller relative dimensions of the systems, in particular smaller area do system required.

The aforementioned objective is solved according to the present invention by means of claim 11, whereby preferred embodiments are disclosed in the dependent claims.

### Description of the Figures

The present invention shall hereinafter be explained in greater detail based upon preferred embodiments of the invention and on the attached Figures.

The Figures show, in simplified schematic diagrams of in graphics:
- Figure 1:: Flow diagram of a process according to the present invention, a phase of recovery of elements present in a saline aqueous medium by living marine macroalgae, and a phase of separation of elements from the macroalgae;
- Figure 2:: Flow diagram of a preferred embodiment of a second phase of separation of elements from the macroalgae;
- Figure 3:: Diagram of a first embodiment of a system and process of recovery of REEs and/or Lithium from a primary medium;
- Figure 4:: Diagram of an embodiment of a first recovery disposition (1) adapted so that provides interaction between an initial aqueous medium (A_{I}) and a quantity (Q) of living marine macroalgae;
- Figure 5:: Diagram of a second embodiment of a system and a process according to the present invention;
- Figure 6:: Diagram of a third embodiment of a system and a process according to the present invention;
- Figure 7:: Diagram of a fourth embodiment of a system and a process according to the present invention;
- Figure 8:: Diagram of a fifth embodiment of a system and a process according to the present invention;
- Figure 9:: Diagram of an embodiment of separation of part of the elements from a first solution after dissolution of the marine macroalgae;
- Figure 10:: Graphics of results of experiments with separation of a plurality of REEs by different types of living marine macroalgae, as a function of the salinity of the aqueous medium;
- Figure 11:: Graphics of results of experiments with separation of a plurality of REEs by different types of living marine macroalgae, as a function of the type of macroalgae used;
- Figure 12:: Graphics of results of experiments with separation of Lithium by means of different types of living marine macroalgae, as a function of the type of marine macroalga and initial concentration of Lithium in the aqueous medium.

### Description of preferred embodiments of the invention

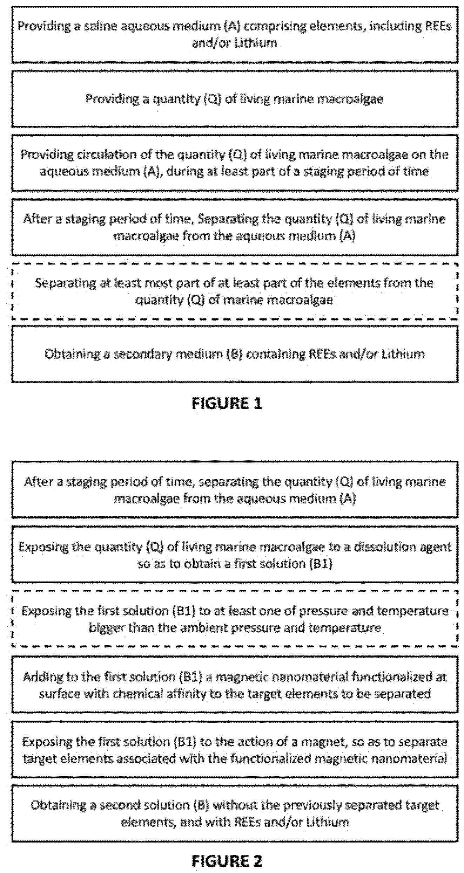

**Figure 1** represents the main steps of a process according to the present invention for recovering certain elements, including rare earth elements (REEs) and/or Lithium, from a saline aqueous medium containing said elements, such as for example an industrial effluent, or from a portion of a natural aquifer.

Said steps correspond to the use of a saline initial aqueous medium (A), with a pH bigger than 6, in particular with a pH bigger than 6 and smaller than 9, and at least partially fluid, presenting initial concentrations of a plurality of elements, including initial concentrations (Cᵢ) of REEs and/or Lithium, and supply of at least one quantity (Q) of living marine macroalgae to said initial aqueous medium (A). It is advantageous when there is provided an active interaction of said living marine macroalgae with said aqueous medium (A), for example with support of fluid circulation means, hydraulic or other.

According to tests that have been carried out, one verifies that after a staging period of time, the living marine macroalgae recovered part of the elements from the initial aqueous medium (A_{I}), so that there results an operating aqueous medium (A_{F}) presenting concentrations (C_{f}) of REEs and/or Lithium smaller than the respective initial concentrations (Cᵢ).

Said staging period of time can correspond to a period that is sufficient for the living marine macroalgae to recover at least most part, preferentially at least 70%, of at least part of the REEs and/or Lithium, eventually further of other elements, such as for example potentially toxic elements (PTEs), and elements from the group of the Platine, initially present in the initial aqueous medium (A_{I}).

It is preferred when said staging period of time is monitored or previously defined according to the initial concentrations (Cᵢ) of elements, so that the final concentrations (C_{F}) of at least part of said elements is smaller than the previously defined values.

It is preferred when at least the final concentrations (C_{F}), that is, at the end of said staging period of time or before the discharge of said aqueous medium to a free aquifer, of PTEs such as for example lead, mercury and others, are smaller than the respectively minimum environmental compliance values applicable to the discharge of industrial effluents into free aquifer of public use.

The quantity (Q) of living marine macroalgae is separated from the operating aqueous medium (A_{F}) after a staging period of time. In this case, said aqueous medium (A) can be discharge to an aquifer of public use, or be recirculated to a second step of process including interaction with living marine macroalgae.

The quantity (Q) of living marine macroalgae can be additionally submitted to a second group of steps of process according to the present invention, so as to provide at least one of: separating at least part of the elements recovered, such as for example PTEs, and providing a medium mostly or only comprising specific elements with industrial reuse potential, including REEs and/or Lithium, corresponding to a secondary medium (B), as represented in particular in Figure 2.

This second group of steps of the recovery process first includes the exposition of the quantity of living marine macroalgae to an acid agent for dissolution thereof, so that there is obtained a first solution including all the elements previously recovered from the aqueous medium (A).

Optionally, the first solution (B1) can be exposed to an environment with at least one of pressure and temperature bigger than the ambient conditions.

In a next step, a preferentially magnetic nanomaterial, functionalized on the surface with groups with specific chemical affinity with the target element that are to be removed is added to said first solution. The solution is afterwards exposed to the action of a magnet, thereby removing the target elements associated with said functionalized nanomaterial and so that results a second solution that presents a bigger concentration of REEs and/or Lithium than other previously removed elements.

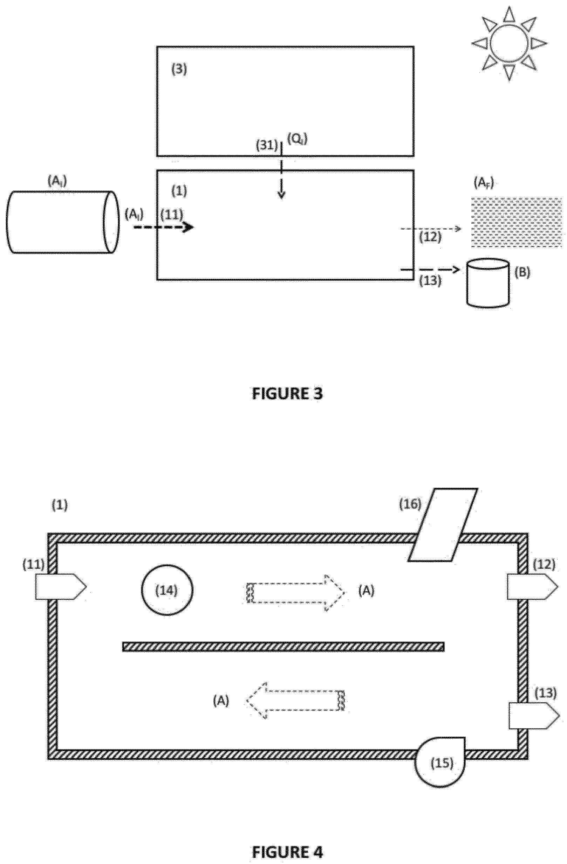

**Figure 3** schematically represents a preferred embodiment of systems and processes of recovery of REEs and/or Lithium from a primary medium (A), preferentially further of other elements, such as for example PTEs, and elements from the group of the Platine. Said primary medium (A) can be part of a free aquifer, such as for example a surface water line, or a residue or an effluent resulting from an industrial process and available in the form of a solid volume, of a liquid volume or of a volume of mud. In the case of a first embodiment of the process, said residue or effluent can be transported from an origin location, for example an industrial installation to a treatment system provided *in situ.* Alternatively, said volume of primary medium (A) can be transported to a recovery system *ex situ* relative to the location of origin.

In the case that the primary medium (A) is initially in the form of muds containing a relatively high concentration of Mercury, for example bigger than a environmental compliance value, then the process can include a step of drying the primary medium (A) by submitting it to a drying temperature of at least 100 °C and at most 400 °C, during a period of up to 12 hours, preferentially of up to 6 horus.

In the case that the primary medium (A) is initially provided in the form of a substantially solid or mud medium, or similar, then the process can include a first step of adding a first aqueous volume to the primary medium (A) so as to obtain an initial aqueous medium (A_{I}) in an aqueous, substantially fluid form and presenting a pH bigger than 6, so that can be collected and processed in a first recovery disposition (1) of the recovery system.

In the case that said primary medium (A) is initially provided in a solid or mud state, or similar, the process according to the present invention can include supplying to said primary medium (A) at least one of: ultra-pure water, water, ammonium sulphate at 2%, ammonium acetate at 2%, ammonium dihydrogen phosphate at 2%, sodium hydroxide 1 mol L⁻¹, water acidified with nitric acid at 2% and water acidified with nitric acid at 10%.

Optionally, further in the case of the primary medium (A) is initially provided in the form of a solid, of a mud or similar, the process can further include the step of adding a first volume (V₁) of aqueous medium, in particular a volume of salted water, to said primary medium (A) so as to obtain an initial aqueous medium (A_{I}).

There can be provided a second aqueous volume (V₂), preferentially of salted water, to said initial aqueous medium (A_{I}), so as to obtain an aqueous volume (V_{A}) with a salinity comprised between 5 and 40, preferentially between 10 and 35.

In particular, the recovery process includes a plurality of successive cycles, each cycle including providing a quantity of the initial aqueous medium (A_{I}), in particular a quantity adapted to the collection volume of the first recovery disposition (1), and providing a quantity (Q_{I}) of living marine macroalgae, for example from a supply disposition (3) provided in optional fluid connection (31) with the first recovery disposition (1), so that these can interact with the initial aqueous medium (A_{I}), preferentially in an active interaction, that is, with active circulation of the living marine macroalgae in the aqueous medium (A), during a given staging period of time (T₁).

After conclusion of the staging period of time, the process can include the discharge of an operating aqueous medium (A_{F}) presenting a final concentration (C_{f}) of REEs and/or Lithium smaller than the initial concentration (Cᵢ) of REEs and/or Lithium, out of the first recovery disposition (1), for example to a water body or to a free water line, and the retention of at least part of said quantity (Q_{I}) of living marine macroalgae in the first recovery disposition (1) so as to produce a second aqueous medium (B) therefrom, including the REEs and/or Lithium recovered by the living marine macroalgae.

Alternatively, the process can include the discharge of said quantity (Q_{I}) of living marine macroalgae from the first recovery disposition (1) for posterior processing of the second aqueous medium (B), and the supply of a second quantity (Q_{II}) of living marine macroalgae for interaction with said aqueous medium (A) on the first recovery disposition (1) during a second staging period of time (T₂).

Said reduction of the initial concentration (Cᵢ) of REEs and/or Lithium can be bigger than 50%, preferentially bigger than 70%, in at least some of said REEs and/or Lithium, depending on the salinity of said aqueous medium being processed, as well as the type and quantity (Q_{I}) of living marine macroalgae used.

In particular, as can be observed in **Figure 4****,** said first recovery disposition (1) can be provided with a closed fluid circulation route in a prevailing circulation direction. Moreover, the first recovery disposition (1) presents a feeder (11) of the initial aqueous medium (A_{I}) and a first discharge (12) provided in fluid connection with a water body or a free water line, such as for example an aquifer or the sea. The first recovery disposition (1) can further present a second discharge (13) that can be provided in fluid connection with collection recipients, for collection of said second aqueous medium (B) including the living marine macroalgae, after conclusion of the treatment of said primary aqueous (A).

Said first recovery disposition (1) can be provided as an open reservoir exposed to solar radiation, with a depth of up to 1 m and an inclined base region in the direction to at least one of said discharges.

It has been demonstrated as particularly advantageous when the interaction between the living marine macroalgae and the aqueous medium (A) unfolds in active manner, with provision of cinematic energy by additional means, including mechanical means of hydraulic impulsion (14), for example in the form of propellers, or similar, and/or gas flow injection means (15), for example of carbon dioxide.

Said quantity (Q_{I}) of living marine macroalgae can be previously determined according to at least one of: the quantity of the initial aqueous medium (A_{I}), the concentration of REEs and/or Lithium previously measured on said primary medium (A), or on said initial aqueous medium (A_{I}) provided therefrom.

Based upon several tests carried out by the Author, it has been shown as particularly advantageous to use a quantity (Q_{I}) of living marine macroalgae comprised between 2 g L⁻¹ and 25 g L⁻¹, preferentially between 2,5 g L⁻¹ and 20 g L⁻¹, and further preferred between 3 and 15 g L⁻¹ of said initial aqueous medium (A_{I}).

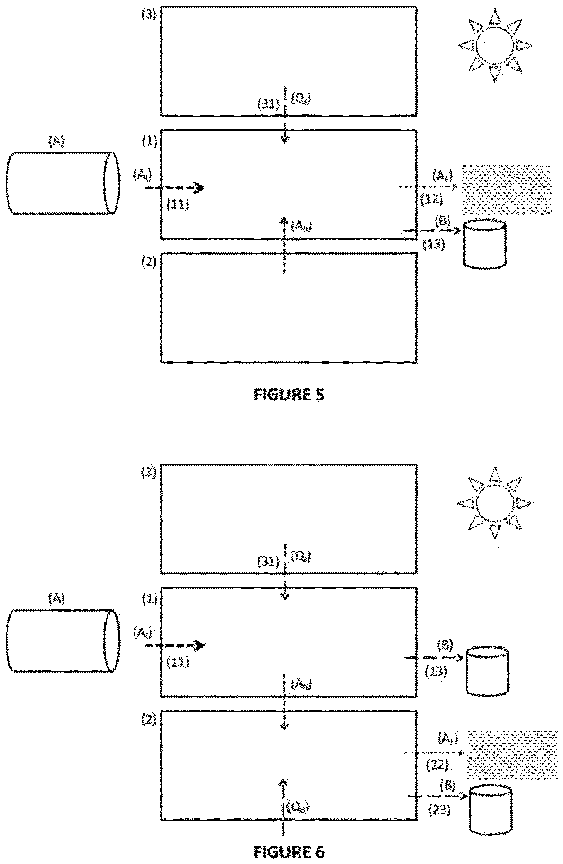

**Figure 5** represents an embodiment of systems and processes according to the present invention, whereby there is provided a primary medium (A) in the form of muds from an industrial process. In this case, a quantity of said muds of primary medium (A) are mixed with a volume of aqueous medium (A_{II}), for example water, or salted water, so as to provide an initial aqueous medium (A_{I}) to a first recovery disposition (1).

Moreover, there is further supplied a first quantity (Q_{I}) of living marine macroalgae, for example supplied through an optional fluid connection (31) from a supply disposition (3) that can be part of an aquaculture of said living marine macroalgae, and without having been previously exposed to aqueous media with elevated concentration of REEs and/or Lithium.

The salinity and pH of said initial aqueous medium (A_{I}) can be further regulated by means of adding a second volume of aqueous medium (A_{II}), preferentially of salted water, such as for example sea water.

The evolution of the process of recovery of REEs and/or Lithium by the living marine macroalgae can be monitored by means of periodic measurement of a set of parameters, including the salinity and the concentrations of at least one of REEs, Lithium and PTEs, optionally further of other elements.

**Figure 6** represents an embodiment whereby the initial aqueous medium (A_{I}), after a staging period of time of interaction with a first quantity (Q_{I}) of living marine macroalgae in a first recovery disposition (1), is discharged here from as second aqueous medium (A_{II}) to a second recovery disposition (2), preferentially with retention of said quantity (Q_{I}) of living marine macroalgae on said first recovery disposition (1).

Said first quantity (Q_{I}) of living marine macroalgae can be processed afterwards for obtaining a medium including REEs and/or Lithium and PTEs that have been recovered by the macroalgae.

A second quantity (Q_{II}) of living marine macroalgae at an initial stage of use, can be added to said second aqueous medium (A_{II}) and its interaction can be promoted during a second staging period of time.

This configuration results advantageous in providing a first and second levels of recovery of at least one of REEs, Lithium and PTEs from said primary medium (A) with a potentially shorter overall duration.

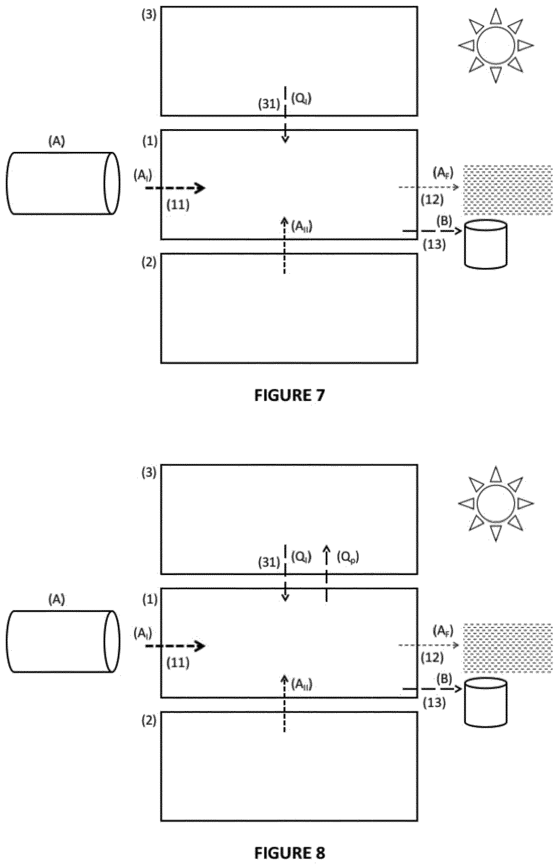

**Figure 7** represents another embodiment of systems and processes of recovery according to the present invention, whereby there is provided an initial aqueous medium (A_{I}), a quantity (Q_{I}) of living marine macroalgae and, after a given staging period of time, there is supplied a volume of second aqueous medium (A_{II}), whereby said second aqueous medium (A_{II}) is preferentially a medium that has been previously object of a first processing with another quantity (Q_{I}) of living marine macroalgae, but that still presents relatively high concentrations of REEs and/or Lithium, and in particular relatively high concentrations of PTEs, for example concentrations above regulatory maximum values allowed for discharge of effluents to free water bodies.

**Figure 8** represents a preferred embodiment of systems and processes according to the present invention, whereby an initial aqueous medium (A_{I}) and a first quantity (Q_{I}) of living marine macroalgae are initially provided to a first recovery disposition (1), whereby a part (Qₚ) of said first quantity (Q_{I}) of living marine macroalgae is thereafter periodically removed from said initial aqueous medium (A_{I}), in particular there is removed a part corresponding to said first quantity (Q_{I}) of living marine macroalgae.

It is preferred when said recovery of part (Qₚ) of the first quantity (Q_{I}) of living marine macroalgae is carried out at least once a day and not more than six times a day.

According to another preferred embodiment, there is removed a part (Qₚ) comprised between 5 and 50%, preferentially between 3 and 40% of the quantity of living marine macroalgae present in the first recovery disposition (1), thereby preferentially at least approximately the quantity of living marine macroalgae at the start of the operation cycle.

In this process, there can be supplied a second volume of aqueous medium (A_{II}), or of salted water.

In a preferred embodiment (not represented), there can be periodically supplied a second quantity (Q_{II}) of living marine macroalgae, preferentially corresponding to a part (Qₚ) of the removed living marine macroalgae, preferentially from a collection disposition (3), adapted for supplying living marine macroalgae to the first recovery disposition (1).

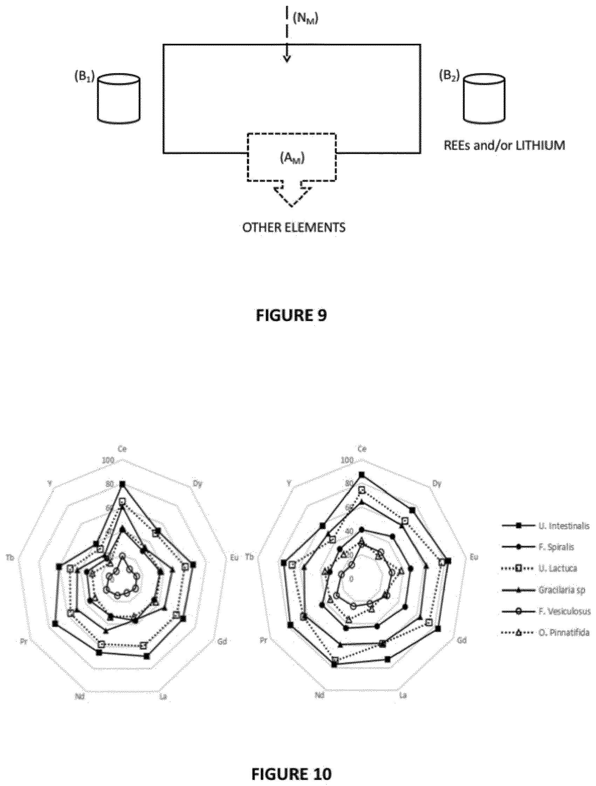

**Figure 9** schematically represents steps of a preferred embodiment of providing a second medium (B₁) based upon the separation of elements, including of REEs and/or Lithium, previously recovered by said quantity (Q_{I}) of living marine macroalgae. In fact, the living marine macroalgae can recover a plurality of different elements present in the initial aqueous medium (A_{I}), including elements with different types of final disposal, such that it is therefore advantageous to carry out a separation of at least part of said elements.

In particular, this embodiment can include the separation of at least most part of the quantity of at least one group of elements, including at least one of REEs and/or Lithium, or further of PTEs, such as for example lead, mercury and other.

In particular, it is foreseen according to the present invention, providing a dissolution agent, including at least one of: acid agent, ultra-pure water, to the quantity (Q) of living marine macroalgae, thereby obtaining a first solution (B₁), optionally in an environment of pressure and temperature bigger than the ambient pressure and temperature, preferentially at a pressure of at least 1200 Psi, and temperature of at least 170°C.

Afterwards, it is foreseen adding to said first solution (B₁) a previously determined quantity of a preferentially magnetic nanomaterial (N_{M}), functionalized at surface with groups with chemical affinity with the target elements to be separated, providing interaction with the solution during a staging period of time, and preferentially exposing afterwards said first solution (B1) to the action of a magnet (A_{M}), so as to separate at least one respective target element, such as for example elements that are not REEs and/or Lithium, from said first solution (B₁) thereby obtaining a second solution (B₂), including the REEs and/or Lithium, optionally others, devoid from the target elements previously separated from said first solution (B₁).

Besides of REEs and/or Lithium, the process according to the present invention can further provide the removal and separation of other elements, including elements of the group of the Platine that can be provided in a second solution (B₂) whereby they can represent the majority concentration of elements.

Alternatively, the second medium (B₂) can be provided based upon drying the quantity of macroalgae, incineration, combustion or pyrolysis thereof and separation of the several elements present in the ashes or chars resulting therefrom, including REEs and/or Lithium.

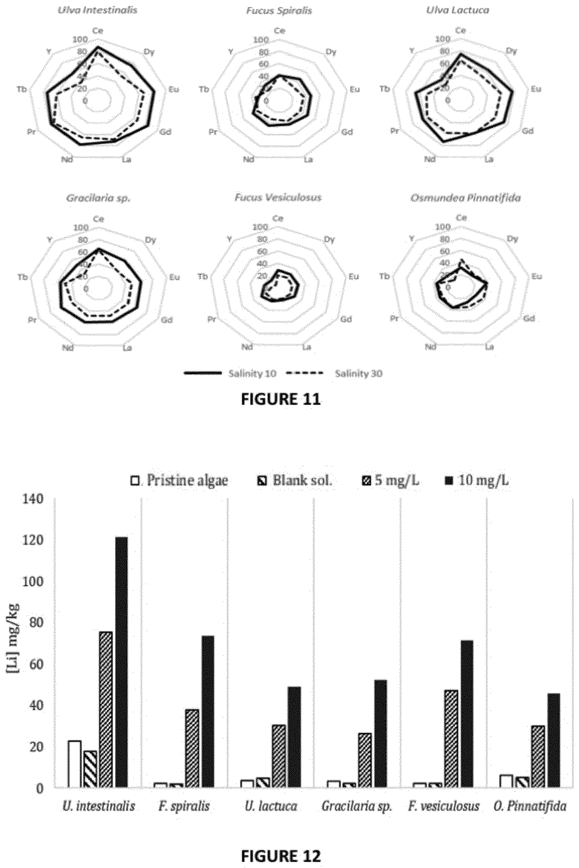

**Figures 10** and 11 show the results of tests conceived and carried out by the Author of the present invention, so as to determine the efficiency of recovery of different elements from the group of REEs by certain living marine macroalgae from a saline aqueous medium.

Said set of experiments was carried out for each one of the following species of marine macroalgae: *Ulva intestinalis, Fucus spiralis, Fucus vesiculosus, Ulva lactuca, Gracilaria sp.* and *Osmundea pinnatifida.* Each one of said species of marine macroalgae interacted with an aqueous medium (A_{I}) with similar concentrations of the following REEs: Ce, Dy, Eu, Gd, La, Nd, Pr, Tb e Y.

As can be observed in **Figure 10****,** the salinity of said initial aqueous medium (A_{I}) has influence in the recovery of REEs by the generality of species of marine macroalgae considered in these tests. In particular, it turns out as advantageous that the salinity of the aqueous medium (A_{I}) is comprised between 5 and 35.

It has been demonstrated as particularly advantageous when the initial aqueous medium (A_{I}) presents a salinity similar to the salinity of the medium of origin of the living marine macroalgae, whereby this can be the case that this of the sea or an aquaculture with marine water or similar hereto.

In this particular, it has been further demonstrated as particular advantageous when the salinity of the aquaculture of origin of the marine macroalgae and of said initial aqueous medium (A_{I}) is between 30 and 35.

As can be observed in **Figure 11****,** the marine macroalgae *Ulva intestinalis, Ulva lactuca* e *Gracilaria* sp present the better rates of recovery of REEs.

In particular, there can be determined the use of at least two different species of said living marine macroalgae. preferentially based upon a first measurement of concentrations in the primary medium (A), so as to improve the combined result of recovery of REEs and/or Lithium, and/or so as to promote the preferentially removal of a given REEs and/or Lithium by a given species of marine macroalga.

Said first quantity (Q_{I}) of living marine macroalgae can advantageously include at least one of the following species of marine macroalgae: *F. vesiculosus* (Phaeophyta), *O*. *pinnatifida* (Rhodophyta), *Ulva Lactuca (Chlorophyta),* Gracilaria sp. (Rhodophyta) and *U. intestinalis* (Chlorophyta).

Moreover, it is preferred when said first quantity (Q_{I}) of living marine macroalgae includes at least one of, preferentially at least two of: *Ulva Lactuca (Chlorophyta),* Gracilaria sp. (Rhodophyta) and *U. intestinalis* (Chlorophyta).

**Figure 12** shows the results of a sets of tests conceived and carried out by the author of the present invention, so as to determine what is the efficiency of recovery of Lithium by the living marine macroalgae from the saline aqueous medium.

Also in this case, said set of experiments was carried out for each one of the following species of marine macroalgae: *Ulva intestinalis, Fucus spiralis, Fucus vesiculosus, Ulva lactuca, Gracilaria sp.* and *Osmundea pinnatifida.* Each one of said species of marine macroalgae interacted with an initial aqueous medium (A_{I}) with two concentrations of Lithium: 5 and 10 mg/L.A "field algae" corresponds to algae collected directly from an ecosystem, whereas the "white sun" corresponds to algae kept in contact with sea water to which no Lithium has been added.

According to tests carried out and other known biophysical characteristics, it is preferred when the living marine macroalga used in the process of recovery of REEs and/or Lithium according to the invention is the *Ulva lactuca.*

## Claims

1. Process of recovery of rare earth elements (REEs) and/or Lithium from a primary medium (A) including the following steps:
- providing an initial aqueous medium (A_{I}) of the primary medium (A), presenting initial concentrations (Cᵢ) of at least one REEs and/or Lithium and a pH bigger than 6, to a first recovery disposition (1);
- providing at least a first quantity (Q_{I}) of living marine macroalgae, optionally further at least a second quantity (Q_{II}) thereof, to the first recovery disposition (1) so that can actively interact with the initial aqueous medium (A_{I}) during a staging period of time;
- after the staging period of time, obtaining an operative aqueous medium (A_{F}) presenting current concentrations (C_{F}) of at least one REEs and/or Lithium, smaller than the respective initial concentrations (Cᵢ);
- separating at least part of the quantity (Q_{I}, Q_{II}) of living marine macroalgae from the operating aqueous medium (A_{F});
- processing the separated quantity (Q_{I}, Q_{II}) of living marine macroalgae so as to obtain a secondary medium (B) that includes quantities of REEs and/or Lithium at least similar to the respective quantities previously recovered by the living marine macroalgae from the aqueous medium (A_{I}, A_{F}).

2. Process according to claim 1, **characterized**
**in that** comprises a plurality of operation cycles including said steps, whereby in each operation cycle there is recovered a quantity of REEs, and/or Lithium, corresponding to at least 50% of, preferentially at least 70% of, a respective initial concentration (Cᵢ), and
**in that** further includes at least one of the steps before interaction with living marine macroalgae:
- determining the initial concentration of elements, including at least REEs and/or Lithium, present in the primary medium (A);
- measuring the initial salinity of at least one of: primary medium (A) and initial aqueous medium (A_{I});
- providing a first aqueous volume (V₁), in particular a volume of salted water, to the primary medium (A) so as to obtain a first aqueous medium (A_{I}), whereby said first volume of water (V₁) is determined so that the first aqueous medium (A_{I}) presents a pH greater than 6 and smaller than 9, and preferentially with a mass load of living marine macroalgae, with relation to the quantity (Q_{I}, Q_{II}) thereof, of at most 200 g L⁻¹, preferentially at most 40 g L⁻¹, particularly preferentially at most 10 g L⁻¹, and so that can be collected on the first recovery disposition (1),
and during during the staging period of time, includes determining the concentration of at least one REE and/or Lithium, optionally further of other elements, such as for example of at least one of the group of PTEs, of said aqueous medium collected on the first recovery disposition (1), for example in intervals of at least 24 hours, optionally in intervals of shorter duration, preferentially at least until obtaining the operating aqueous medium (A_{F}).

3. Process according to claim 1 or 2, **characterized in that** further includes at least one of the following steps:
- at least in case the primary medium (A) is initially provided in the form of a solid or of a mud, adding a first aqueous volume (V₁), preferentially a volume of salted water, to the primary medium (A) to obtain the initial aqueous medium (A_{I});
- optionally, in case the primary medium (A) is initially in the form of muds containaing Mercury, submitting to a temperature of at least 100 °C and at most 400 °C during up to 12 hours, preferentially up to 6 hours;
- optionally, in case the primary medium (A) is initially in a solid state or of muds, supplying to said primary medium (A) at least one of: ultra-pure water, water, ammonium sulphate at 2%, ammonium acetate at 2%, ammonium dihydrogen phosphate at 2%, sodium hydroxide 1 mol L⁻¹, acidified water with nitric acid at 2% and acidified water with nitric acid at 10%;
- optionally, supplying a second aqueous volume (V₂), preferentially a volume of salted water, to said initial aqueous medium (A_{I}), so as that the latter presents a salinity comprised between 5 and 40, preferentially between 10 and 35;
whereby at least one of said first and second aqueous volumes (V₁, V₂) is preferentially supplied from at least one of:
- a second recovery disposition (2) provided in optional fluid connection with the first recovery disposition (1), preferentially so that provides reuse of a second aqueous medium (A_{II}) processed in a previous operation cycle on the first recovery disposition (1);
- a supply disposition (3) provided in optional fluid connection (31) with the first recovery disposition (1) for supply of a quantity (Q) of living marine macroalgae to the first recovery disposition (1);
and **in that** further includes at least one of the following steps:
- discharging said operative aqueous medium (A_{F}) together with at least part of said quantity (Q_{I}, Q_{II}) of living marine macroalgae out of said first recovery disposition (1), and separating these, as well as separating the REEs and/or Lithium from said quantity (Q_{I}, Q_{II}) of living marine macroalgae out of said first recovery disposition (1);
- discharging at least part of said operative aqueous medium (A_{F}) out of said first recovery disposition (1) after said staging period of time, in particular to an aquifer or a free water body, such as for example river or sea.

4. Process according to any of claims 1 to 3, **characterized in that** includes at least one of the steps of:
- selecting at least one species, preferentially at least two species, from at least one of said groups of marine macroalgae: *Phaeophyta, Rhodophyta, Chlorophyta;*
- determining a first quantity (Q_{I}) to living marine macroalgae to be supplied to said first recovery disposition (1), further based upon at least one of: the concentrations of REEs and/or Lithium and the salinity of the volume (V_{A}) of said initial aqueous medium (A_{I}),
whereby said first quantity (Q_{I}) of living marine macroalgae is determined at least in relation to the volume (V_{A}) of said primary medium (A), optionally to the sum thereof with other aqueous volumes,
whereby said first quantity (Q_{I}) of living marine macroalgae is further determined based upon the initial concentration (Cᵢ) of REEs and/or Lithium on said primary medium (A), and whereby said first quantity (Q_{I}) of living marine macroalgae is provided according to at least one of:
- a mass of living marine macroalgae comprised between 5 and 20 kg/m³, preferentially between 10 and 15 kg/m³ with relation to the volume (V_{A}) of said initial aqueous medium (A_{I});
- a mass of living marine macroalgae comprised between 8 and 12 kg/m² with relation to the top surface of the aqueous medium (A_{I}, A_{F}) in the first recovery disposition (1) and including a distribution up to 1 m depth, preferentially up to 0,8 m depth thereof.

5. Process according to any of previous claims 1 to 4, **characterized**
**in that** said staging period of time is determined with relation to the supply of said quantity (Q_{I}) of living marine macroalgae according to at least one of:
- a priori based upon at least one of: volume of initial aqueous medium (A_{I}) and quantity (Q) of living marine macroalgae, whereby it is preferred when said staging period of time is of less than 96 hours, preferentially of less than 72 hours;
- a posteriori based upon reaching at least one of:
- a reduction by at least approximately a previously defined order of magnitude of the level of concentration of at least one REE and/or Lithium, with relation to respective initial levels of concentration (Cᵢ);
- at least a pre-established concentration level of REEs and/or Lithium, smaller than respective initial concentration levels;
- based upon periodic measurement of the concentration of REEs and/or Lithium, optionally further of a plurality of other elements.

6. Process according to any of previous claims 1 to 5, **characterized**
**in that** in at least some of said operation cycles, further includes at least one of the following steps:
- removing at least part, preferentially at least most part, of said first quantity (Q_{I}) of living marine macroalgae of said aqueous medium (A_{I}, A_{II});
- providing a second quantity (Q_{II}) of living marine macroalage to said aqueous medium (A_{I}, A_{II}), in at least one of said first and second recovery dispositions (1, 2), whereby said second quantity (Q_{II}) of living marine macroalgae is determined according to at least one of the factors considered for the determination of said first quantity (Q_{I}) of living marine macroalgae;
- maintaining at least part of the quantity (Q_{I}, Q_{II}) of living marine macroalgae on said first recovery disposition (1), after the staging period of time and after discharge of said operating aqueous medium (A_{F}) out of said first recovery disposition (1);
- optionally, discharging the quantity (Q_{I}, Q_{II}) of living marine macroalgae out of said first recovery disposition (1).

7. Process according to any of previous claims 1 to 6, **characterized**
**in that** at least some of said operation cycles further include at least one of the following steps:
- periodically removing, preferentially at least once a day, part of said first quantity (Q_{I}) of living marine macroalgae from said aqueous medium (A_{I}, A_{II}), preferentially removing a part corresponding to the growth rate of said first quantity (Q_{I}) of living marine macroalgae, for example a part comprised between 2 and 50%, preferentially between 5 and 40%, thereby preferentially at least approximately resuming the quantity of macroalgae at the beginning of the operation cycle;
- periodically supplying a second quantity (Q_{II}) of living marine macroalgae, preferentially corresponding to a part of the removed living marine macroalgae, preferentially from a supply disposition of living marine macroalgae.

8. Process according to any of previous claims 1 to 7, **characterized in that** during at least part of each operation cycle, further includes at least one of the following steps:
- providing said active interaction of the living marine macroalgae with the aqueous medium (A_{I}, A_{II}) for example by means of at least one of:
- hydraulic impulsion means, for example in the form of rotating shovels, and
- injection means of a gas flow into said aqueous medium (A_{I}, A_{II}),
preferentially in a prevailing circulation direction in closed circuit and so as to minimize the growth of micro-algae such as phytoplankton;
- providing a quantity of nutrients to said quantity (Q_{I}, Q_{II}) of living marine macroalgae;
- providing a gas flow, including at least one of: atmospheric air and carbon dioxide to at least one of:
- to said aqueous medium (A_{I}, A_{II}), including at least one of said first and second recovery dispositions (1, 2);
- to said supply disposition (3);
- providing aeration and luminous radiation to said first recovery disposition (1), and exposition to at least one of the following operation inputs:
- natural light and/or artificial light, for example according to outside luminosity, ensuring previously defined lighting levels during the night periods;
- exterior environment and/or interior environment, for example according to outside temperature, so as to minimize temperature variations on the aqueous medium;
- regulating each one of the operation inputs, including movement and supply of gas flow to said aqueous medium (A_{I}, A_{II}).

9. Process according to any of previous claims 1 to 8, **characterized**
**in that** said step of processing the quantity (Q_{I}, Q_{II}) of living marine macroalgae, after said staging period of time and separation thereof from the operative aqueous medium (A_{F}) so as to obtain a secondary medium (B), includes:
- providing an agent of dissolution, including at least one of: an acid agent at 2% or at 10%, to the quantity (Q) of marine macroalgae, thereby obtaining a first solution (B₁);
- optionally, providing an ambient of pressure and temperature higher than the ambient pressure and temperature, preferentially a pressure at least 1200 psi and temperature of at least 170 °C;
- adding to the first solution (B₁) a previously determined quantity of a preferentially magnetic (N_{M}) nanomaterial functionalized at surface with groups having chemical affinity with target elements to be separated, providing interaction within the solution during a staging period of time, and preferentially thereafter exposing the solution to the action of a magnet (A_{M}), so as to separate at least a respective target element, such as for example elements that are not REEs and/or Lithium, from said first solution (B₁), thereby obtaining said secondary medium (B) in the form of a solution mostly comprising at least one of REEs and/or Lithium (B₂), and devoid of target elements removed from the first solution (B₁),
- optionally, separation of PTEs from said first solution (B₁), including at least one of: lead, mercury, chromium, nickel, copper, cadmium and others;
- optionally, sorption of REEs and/or Lithium after obtaining a solution of REEs and/or Lithium, so that said secondary medium (B) is provided in a solid mass;
- optionally, separation of REEs from said first solution (B₁) so as to obtain said secondary medium (B) comprising at least one REEs and/or Lithium.

10. Process according to any of previous claims 1 to 8, **characterized in that** said steps of processing the quantity (Q_{I}, Q_{II}) of living marine macroalgae, after said staging period of time and separation thereof from the operating aqueous medium (A_{F}) so as to obtain a secondary medium (B), includes:
- optionally, drying said quantity (Q_{I}, Q_{II}) of marine macroalgae;
- incineration, including by combustion or pyrolysis, of said quantity (Q_{I}, Q_{II}) of marine macroalgae so as to obtain ashes or chars, including at least one REEs and/or Lithium.

11. Process according to any of previous claims 1 to 10, **characterized in that** further includes the following steps:
- providing an aquaculture of marine macroalgae in an aquaculture disposition, preferentially provided in optional fluid connection with a supply disposition (3),
whereby said aquaculture of marine macroalgae comprises species of at least one of the following groups of marine macroalgae: *Phaeophyta, Rhodophyta, Chlorophyta;*
- optionally, from time to time measuring and regulating the salinity of the aqueous medium of said aquaculture of marine macroalgae.

12. System for recovery of elements, including of rare earth elements (REEs) and/or Lithium, from a primary medium (A), in particular for carrying out a process according to any of previous claims 1 to 11,
said system being characterized for presenting:
- a first recovery disposition (1) adapted so that can collect a volume (V_{A}) of aqueous medium (A), for example through a first connection (11), providing interaction thereof with a quantity of living marine macroalgae (Q_{I}, Q_{II}), and that can discharge said volume of fluid, for example through a second connection (12),
- supply means of a quantity of living marine macroalgae to said first recovery disposition (1), for example from a supply disposition (3),
- optionally, further a second recovery disposition (2) provided in fluid connection with said first recovery disposition (1) so that can carry out at least one of: collecting a fluid discharge therefrom, and supplying a fluid flow hereto;
- preferentially, at least one supply disposition (3) provided in optional fluid connection with said first recovery disposition (1) and adapted so that can supply living marine macroalgae to the latter, optionally also collecting macroalgae therefrom;
- preparation means of a secondary medium (B) from said quantity (Q_{I}, Q_{II}) of living marine macroalgae in one of two forms, including: in the form of a solution comprising REEs or in the form of ashes or chars comprising REEs;
- optionally, further one other recovery disposition for collection of macroalgae and preparation of at least one of said forms of second medium (B) from said marine macroalgae.

13. System according to claim 12, **characterized in that** at least said first recovery disposition (1) is provided with at least one free fluid surface provided aerated and exposed to luminous radiation, optionally covered with a surface that is at least partially transparent to luminous radiation at least in the extension of horizontal projection of said first recovery disposition (1), preferentially further with at least one other contention surface also aerated and exposed to luminous radiation along at least part of its extension.

14. System according to claim 12 or 13, **characterized in that** at least said first recovery disposition (1), preferentially also said second recovery disposition (2), presents at least one of:
- a useful depth for collection of aqueous medium of up to 1,5 m, preferentially of up to 1,0 m, particularly preferentially of up to 0,80 m;
- a general shape of closed circuit type, for example of elongated rectangular or oval type including two longitudinal extensions united by two transversal circulation extensions;
- hydraulic impulsion means (14), for example in the form of rotating shovels, provided so that can generate a circulation of the aqueous medium (A_{I}, A_{F}) in at least one of: in a direction along said circuit, a direction in depth;
- gas supply means (15) provided so that can supply at least one of: atmospheric air and carbon dioxide to said aqueous medium (A_{I}, A_{F});
- nutrients supply means (16) provided so that can supply nutrients to the quantity (Q) of living marine macroalgae.

15. System according to any one of claims 12 to 14, **characterized**
**in that** further includes at least one of:
- a macroalgae collection disposition adapted so that can collect a quantity of macroalgae for at least one drying process thereof, preferentially further for a process of incineration thereof;
- an apparatus adapted so that can provide drying of macroalgae;
- an apparatus adapted so that can provide incineration, combustion or pyrolysis of macroalgae.

16. System according to any one of previous claims 12 to 15, **characterized in that** said solution preparation means of said REEs and/or Lithium, include at least one of:
- a macroalgae collection disposition;
- means for supplying an acid agent to a macroalgae collection disposition, so as to obtain a first solution including REEs and/or Lithium;
- an apparatus adapted so that provides at least one of pressure and temperature bigger than the ambient pressure and temperature to the macroalgae collection disposition, preferentially a pressure of at least 1200 psi, and a temperature of at least 170 °C;
- means for preparation of functionalized nanomaterials for a preferentially magnetic interaction with target elements;
- a magnetic disposition comprising at least one, preferentially a plurality of magnetic devices arranges along at least one alignment, and that can provide magnetic interaction with relation to the macroalgae collection disposition.
